Europäisches Patentamt

European Patent Office

Office européen des brevets

(19)

(11) Veröffentlichungsnummer: **0 060 391**
**B1**

## (12) EUROPÄISCHE PATENTSCHRIFT

(45) Veröffentlichungstag der Patentschrift:
**02.01.86**

(21) Anmeldenummer: **82100998.2**

(22) Anmeldetag: **11.02.82**

(51) Int. Cl.⁴: **F 04 B 15/06**, F 25 B 29/00, F 25 B 41/00

(54) **Verfahren zur Förderung eines Fluids innerhalb einer Absorptions-Wärmepumpe.**

(30) Priorität: **16.03.81 DE 3110051**
**16.03.81 DE 3110053**
**16.10.81 DE 8130254 U**
**14.12.81 DE 3149467**

(43) Veröffentlichungstag der Anmeldung:
**22.09.82 Patentblatt 82/38**

(45) Bekanntmachung des Hinweises auf die Patenterteilung: **02.01.86 Patentblatt 86/01**

(84) Benannte Vertragsstaaten:
**AT BE CH DE FR GB LI NL**

(56) Entgegenhaltungen:
**DE-A- 1 501 013**
**DE-A- 2 116 091**
**DE-C-   822 648**
**GB-A- 1 200 180**
**US-A- 1 989 520**
**US-A- 2 019 290**
**US-A- 2 156 912**
**US-A- 2 298 924**
**US-A- 3 221 661**
**US-A- 3 316 849**
**US-A- 3 639 087**
**US-A- 3 674 378**

(73) Patentinhaber: **Buderus Aktiengesellschaft**
**Sophienstrasse 32-34**
**D-6330 Wetzlar (DE)**

(72) Erfinder: **Gruber, Franz**
**Zur Gabjei 119**
**D-5040 Brühl (DE)**
Erfinder: **Goebel, Peter**
**Wittelsbacher Strasse 134**
**D-5040 Brühl (DE)**
Erfinder: **Heimbach, Paul, Dipl.-Ing.**
**Tulpenweg 20**
**D-5000 Köln 50 (DE)**

(74) Vertreter: **Benner, Alwin, Dipl.-Ing.**
**Buderus Aktiengesellschaft ZA-Patentabteilung Postfach 1220**
**D-6330 Wetzlar (DE)**

Jouve, 18, rue St-Denis, 75001 Paris, France

## Beschreibung

Die Erfindung betrifft ein Verfahren zur Förderung eines Fluids innerhalb einer Absorptions-Wärmepumpe oder eine Absorptions-Kälteanlage mit einem Pumpen-Motor-Aggregat.

Bei einer solchen Anlage wird ein kältemittelreiches Lösungsmittel von einer Pumpe gefördert und im Kreislauf geführt. Das schwersiedende Lösungsmittel wird von dem leichtersiedenden Kältemittel abgetrennt, das nach Kondensation bei hoher und anschließender Verdampfung bei tiefer Temperatur vom Lösungsmittel absorbiert und der Pumpe erneut zugeführt wird.

Das aus dem Absorber angesaugte Fluid befindet sich nahezu im Siedezustand. Das Fluid beginnt bereits bei relativ geringfügigen Temperaturschwankungen an der Saugseite der Pumpe zu sieden. Dabei findet Dampfbildung statt und es kommt zu unerwünschten Kavitationserscheinungen, die die Förderung des Fluids unter Umständen unterbinden. Daneben treten störende Geräusche auf, sowie Schwingungen, die zu einer mechanischen Belastung, insbesondere der Lager, führen.

Die Kavitation kann durch Vergrößerung der Zulaufhöhe vom Absorber zur Pumpe verhindert werden (DE-C-822 648). In vielen Anwendungsfällen ist dies aus Platzgründen jedoch nicht möglich. Es wurde auch schon vorgeschlagen, den Druck unmittelbar an der Saugseite der Pumpe zu erhöhen (US-A-3 639 087, US-A-3 674 378). Diese Maßnahme reicht aber nicht in allen Fällen aus, die Kavitation mit Sicherheit zu verhindern.

Der Erfindung liegt daher die Aufgabe zugrunde, ein Verfahren der eingangs genannten Art zu entwickeln, mit dem auf energetisch günstige Weise Kavitation verringert und eine störungsfreie Förderung erreicht werden.

Diese Aufgabe wird erfindungsgemäß dadurch gelöst, daß ein Teilstrom des zu fördernden Fluids aus der Saugkammer der Pumpe abgezweigt und in Berührung mit Wärme entwickelnden Teilen des Motors gebracht wird.

Die Verlustwärme am Motor wird nicht durch die Gesamtmenge des zu fördernden Fluids aufgenommen, sondern nur durch einen Teilstrom davon, der von dem übrigen zu fördernden Fluid abgezweigt worden ist. Die wesentlichen Wärmequellen befinden sich an dem Spalt zwischen Rotor und Stator, sowie im Wellenlager des Rotors. Der abgezweigte Teilstrom des Fluids wird deshalb in Berührung mit diesen Teilen des Motors gebracht und führt dabei Wärme ab. Der kavitationsgefährdete Bereich an der Saugseite der Pumpe bleibt dagegen kalt.

Der abgezweigte Teilstrom wird anschließend, d. h. nachdem er in Berührung mit rotierenden, Wärme entwickelnden Teilchen des Motors war, gekühlt und dem zu fördernden Fluid erneut zugemischt. Mit der erneuten Rückführung des Fluids wird ein geschlossener Fluidkreislauf hergestellt, der im Hinblick darauf, daß das Kältemittel nicht in die Atmosphäre gelangen soll, erwünscht ist.

Es ist zu empfehlen, den abgezweigten Teilstrom zur Kühlung und erneuten Zumischung auf die Oberfläche eines in einem Absorber enthaltenen Kühlers aufzugeben. Der Teilstrom kühlt sich dabei ab und ist bereits kalt, wenn er sich mit dem restlichen, im Sumpf des Absorbers befindlichen Fluid vermischt. Auf indirekte Weise wird somit die Verlustwärme der Vorpumpe an das Kühlmittel für den Absorber abgegeben. Bei einer Wärmepumpen-Heizanlage, bei der der Absorber durch das Heizfluid gekühlt wird, kommt die Wärme direkt der Heizleistung zugute.

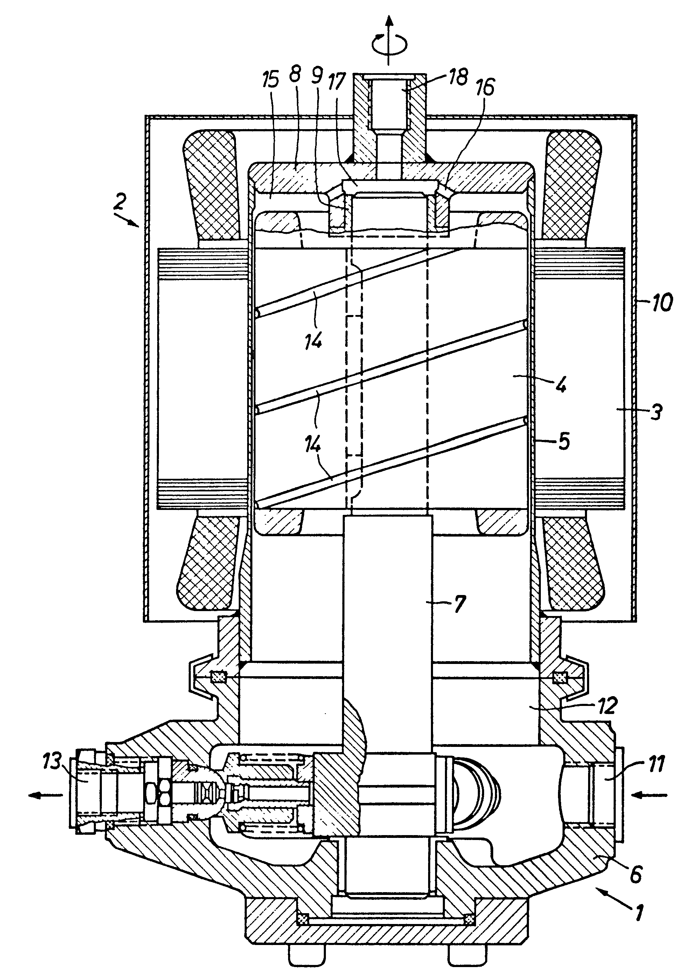

Die Erfindung sowie weitere Einzelheiten der Erfindung werden anhand eines schematisch dargestellten Ausführungsbeispieles in einer einzigen Figur näher erläutert.

Das Pumpen-Motor-Aggregat umfaßt eine Radialkolbenpumpe 1 und einen Spaltrohrmotor 2 die auf einer gemeinsamen Welle 7 laufen. Pumpengehäuse 6 und Motorgehäuse 10 bilden die Umhüllung. Zwischen einem Rotor 4 und einem Stator 3 ist ein Spaltrohr 5 aus nichtmagnetisierbarem Material angeordnet.

Das Spaltrohr 5 ist mit einer Platte 8 an der der Pumpe 1 abgewandten Seite verschlossen. Diese weist einen Vorsprung auf, der ein Lager 9 für die Welle 7 trägt.

Die Pumpe 1 weist einen Sauganschluß 11 auf, der in die Saugkammer 12 mündet, sowie einen Druckanschluß 13. In der Umfangsfläche des Rotors 4 ist eine schraubenförmige Fördernut 14 vorgesehen, die in Drehrichtung des Rotors 4 gesehen, von der Saugkammer 12 wegführt. Die Ganghöhe der Fördernut 14 ist so bemessen, daß sie über die Länge des Rotors 4 eine bis fünf, vorzugsweise zwei bis drei, Windungen aufweist. Beispielsweise beträgt die Ganghöhe 3 cm. Es könnten auch mehrere Fördernuten über den Umfang des Rotors 4 verteilt sein. In der Darstellung weist die Nut einen etwa halbkreisförmigen Querschnitt auf, deren Radius z. B. 3 bis 4 mm beträgt. Es sind auch andere Querschnittsformen denkbar, beispielsweise Dreiecksformen.

Beim Betrieb gelangt das zu fördernde Fluid über den Sauganschluß 11 zur Saugkammer 12. Von dort wird es zum Druckanschluß 13 gefördert. Um Kavitation zu verhindern, wird ein Teilstrom aus der Saugkammer 12 abgezweigt und über die Wärme entwickelnden Teile des Motors 2 geleitet. Die Förderung des Teilstroms erfolgt über die Fördernut 14, die bei Drehbewegung des Rotors 4 eine gewisse, durch die Ganghöhe den Querschnitt derselben bestimmte Fluidmenge aus der Saugkammer 12 abschöpft und in die Kammer 15 fördert. Ein Teil des Fluids verteilt sich durch den Spalt zwischen Rotor 4 und Spaltrohr 5 über die gesamte Rotoroberfläche, die dabei gekühlt wird. Anschließend gelangt der Teilstrom aus der Kammer 15 durch Zuführungen 16 in den Raum 17, wo er das Lager 9 kühlt und zugleich schmiert. Der erwärmte Teilstrom wird über die Abführungsöffnung 18 abgeführt.

Neben der Aufgabe, einen Teilstrom des Fluids zu fördern, hat die Fördernut 14 zusätzlich den Zweck, Gasblasen, die eventuell in der Saugkammer 12 oder bei der Erwärmung am Motor 2 entstehen, zusammen mit dem Teilstrom aus dem Pumpen-Motor-Aggregat abzuführen.

**Patentansprüche**

1. Verfahren zur Förderung eines Fluids innerhalb einer Absorptions-Wärmepumpe oder Absorptions-Kälteanlage mit einem Pumpen-Motor-Aggregat, dadurch gekennzeichnet, daß ein Teilstrom des zu fördernden Fluids aus der Saugkammer (12) der Pumpe (1) abgezweigt und in Berührung mit Wärme entwickelnden Teilen des Motors gebracht wird.

2. Verfahren nach Anspruch 1, dadurch gekennzeichnet, daß der Teilstrom des Fluids gekühlt und dem zu fördernden Fluid erneut zugemischt wird.

3. Verfahren nach den Ansprüchen 1 und 2, dadurch gekennzeichnet, daß der Teilstrom zur Kühlung und erneuten Zumischung auf die Oberfläche eines in einem Absorber enthaltenden Kühlers aufgegeben wird.

4. Verfahren nach den Ansprüchen 1 bis 3, dadurch gekennzeichnet, daß der Teilstrom durch den Rotor 4 des Motors (2) angesaugt wird, und dosierbar ist.

**Claims**

1. Fluid-pumping method with an absorption heat pump or an absorption refrigeration plant with a pump/motor aggregate, characterized by that a branch flow of the fluid to be pumped is separated from the suction chamber (2) of the pump (1) and is brought into contact with parts of the motor generating heat.

2. Method according to claim 1, characterized by that the branch flow of the fluid is cooled and is then returned into the fluid to be pumped.

3. Method according to claims 1 and 2, characterized by that the branch flow for cooling and subsequent admixture is brought on the surface of a cooler contained in an absorber.

4. Method according to claims 1 to 3, characterized by that the branch flow is sucked on by the rotor (4) of the motor (2), and that it can be dosed.

**Revendications**

1. Procédé pour pomper un fluide dans une pompe à chaleur à absorption ou une installation à froid à absorption avec un groupe moto-pompe, caractérisé par le fait qu'un courant partiel du fluide à pomper est dévié de la chambre d'aspiration (12) de la pompe (1) et est mis en contact avec les parties du moteur développant de la chaleur.

2. Procédé selon la revendication 1, caractérisé par le fait que le courant partiel est refroidi et est remélangé au fluide à pomper.

3. Procédé selon les revendications 1 et 2, caractérisé par le fait que le courant partiel est dirigé sur la surface d'un réfrigérant contenu dans l'absorbeur pour le refroidissement et le remélange.

4. Procédé selon les revendications 1 à 3, caractérisé par le fait que le courant partiel est aspiré par le rotor 4 du moteur (2) et peut être dosé.

0 060 391